# FASCICULE DE BREVET EUROPEEN

(11) **EP 3 525 593 B1**
(45) Date de publication et mention de la délivrance du brevet: **07.06.2023**
(21) Numéro de dépôt: 17780779.9
(22) Date de dépôt: 13.10.2017
(51) Int. Cl.: A01N 65/00, A01P 21/00

(54) **PROCÉDÉ D'ÉLICITATION D'UNE PLANTE AU MOYEN D'EXTRAITS DE CHAMPIGNONS MACROSCOPIQUES COMESTIBLES**
VERFAHREN ZUM HERVORRUFEN EINER PFLANZE MITTELS GENIESSBARER MAKROSKOPISCHER PILZEXTRAKTE
PROCESS FOR ELICITING A PLANT BY MEANS OF EDIBLE MACROSCOPIC FUNGAL EXTRACTS

(30) Priorité: 14.10.2016 FR 1660000
(43) Date de publication de la demande: 21.08.2019
(73) Titulaire: Universite de Limoges, 87000 Limoges (FR); Covertis, 87000 Limoges (FR)
(72) Inventeur: FAUGERON, Céline, 87590 Saint-Just-Le-Martel (FR); GLOAGUEN, Vincent, 87000 Limoges (FR); ASTIER, Cédric, 87260 Vicq-Sur-Breuilh (FR); MOINE, Charlotte, 87000 Limoges (FR)
(74) Mandataire: Cabinet Chaillot
(86) Numéro de dépôt international: PCT/EP2017/076174
(87) Numéro de publication internationale: WO 2018/069497

(56) Documents cités:
- WO-A1-99/03346
- WO-A2-02/26037
- WO-A2-2007/042557
- JP-A- 2011 140 463
- OZERETSKOVSKAYA O L ET AL: "OLIGOSACCHARINS AS REGULATORY MOLECULES OF PLANTS", RUSSIAN JOURNAL OF PLANT PHYSIOLOGY, MOSCOW, RU, vol. 43, no. 5, 1 janvier 1996 (1996-01-01), pages 648-655, XP002061729, ISSN: 1021-4437 cité dans la demande
- DATABASE WPI Week 199045 Thomson Scientific, London, GB; AN 1990-338512 XP002061732, & JP H02 243697 A (MEIJI SEIKA KAISHA) 27 septembre 1990 (1990-09-27) cité dans la demande
- DATABASE BIOSIS [Online] BIOSCIENCES INFORMATION SERVICE, PHILADELPHIA, PA, US; 2005, NG TZI BUN: "Mushroom proteins related to host defense", XP002769700, Database accession no. PREV200510102032 & INTERNATIONAL JOURNAL OF MEDICINAL MUSHROOMS, vol. 7, no. 1-2, 2005, pages 221-236, ISSN: 1521-9437

## Description

L'invention a pour objet un procédé pour la stimulation des défenses naturelles des plantes du genre de celles qui sont agronomiquement utiles. Il s'agit en particulier, de la vigne, des arbres fruitiers, tel que le pommier, des plantes légumières et notamment les tomates et les pommes de terre, ou des céréales, tel que le blé.

La stimulation des défenses naturelles des plantes est un problème très actuel, qui a fait et fait encore l'objet de nombreuses recherches. En effet, les plantes sont capables de développer des réponses physiologiques ou métaboliques leur permettant de se défendre lors d'attaques par des agents pathogènes tels que : les virus, les bactéries, les champignons ou les insectes. Ces défenses naturelles sont de plusieurs types :
- le renforcement des barrières cellulaires pré-existantes en stimulant la lignification des parois des cellules végétales ;
- la synthèse par la plante de composés à activité antibiotique tels que les phytoalexines ;
- la synthèse de protéines enzymatiques pouvant s'attaquer à la paroi des pathogènes telles que les chitinases ou les glucanases.

Ces défenses naturelles peuvent être déclenchées par des molécules élicitrices, ceci même à faible concentration. Parmi ces éliciteurs figurent, par exemple, des oligosaccharides, notamment les oligogalacturonates, les oligoglucanes ou les oligochitines. Ces molécules peuvent être produites dans le contexte d'une attaque par un agent pathogène et sont perçues par la plante attaquée comme un signal auquel elle répond en stimulant ses défenses naturelles.

Un apport exogène d'une solution d'éliciteur(s), par exemple sous forme de pulvérisation, peut aussi stimuler les défenses naturelles de la plante traitée et permettre ainsi de réduire les symptômes des maladies provoquées par ces agents pathogènes.

La demande internationale WO 2007/042557 concerne des compositions phytopharmaceutiques destinées à stimuler les défenses naturelles des plantes, notamment la vigne, la tomate et la pomme de terre, permettant ainsi de lutter contre les maladies des plantes, notamment les oïdiums et les mildious. Cette demande décrit une composition caractérisée en ce qu'elle comporte, à titre de principe actif, au moins un oligosaccharide secrété par ou obtenu à partir d'une souche de champignon pathogène ou non pathogène des plantes. Néanmoins, les seuls champignons décrits dans cette demande sont des champignons pathogènes des plantes.

La demande internationale WO 2004/082381 décrit un procédé pour la stimulation des défenses naturelles des monocotylédones (céréales) et des dicotylédones (la vigne, le tabac, la pomme de terre et la tomate) dans lequel on applique aux feuilles ou aux semences de la plante traitée une quantité efficace d'au moins un des produits du groupe des pentosanes sous la forme d'une composition, dont la concentration en au moins un des produits du groupe est compris entre 50 mg/L et 5000 mg/L. Le procédé met en oeuvre des arabinoxylanes et des xylanes éventuellement hydrolysés, mais le déposant de la présente demande souhaite éviter les éliciteurs de ce type, qui présentent des efficacités faibles pour la protection des plantes traitées.

La demande internationale WO 2004/082380 décrit un procédé pour la potentialisation et la simulation des défenses naturelles des monocotylédones et des dicotylédones, notamment de la vigne, de la pomme de terre et de la tomate. Le principe actif utilisé dans le procédé décrit est le xanthane obtenu à partir d'un procédé bactérien, or le déposant souhaite éviter les éliciteurs provenant de sources impliquant des organismes pathogènes.

Dans la demande internationale WO 1999/053761, on a décrit l'utilisation d'un ou plusieurs composés antifongiques et/ou antibactériens et/ou antiviraux pour amplifier (potentialiser) les réponses des défenses des plantes aux agents pathogènes, obtenues par l'emploi isolément de composés éliciteurs. Les composés antifongiques et/ou antibactériens et/ou antiviraux (désignés par « composés B » dans le brevet susmentionné et utilisés comme potentialisateurs) peuvent être, par exemple, des dérivés d'acide phosphoreux et les composés éliciteurs (désignés par « composés A » dans le brevet susmentionné) peuvent être, par exemple, des oligosaccharides ou des oligopectines pouvant être extraits d'algues ou de levures. Dans ce document, les listes données pour les composés à utiliser pour les éliciteurs A, citent des produits non phytotoxiques ; mais le déposant estime que les composés B, en plus d'être des composés de synthèse, peuvent présenter une phytotoxicité et que, si on les écarte, rien ne permet de supposer que les résultats annoncés pour les éliciteurs non phytotoxiques seraient effectivement atteints.

Dans tous les documents de l'art antérieur précédemment cités, on obtient, certes, une amélioration des défenses des plantes à traiter par rapport à un témoin. Mais le déposant de la présente demande considère que les procédés décrits ne sont pas satisfaisants car il souhaite qu'il n'y ait pas de phytotoxicité du principe actif et que la réduction des besoins de traitement complémentaire ne s'effectue pas par des champignons pathogènes des plantes ou des fongicides de synthèse.

La demande internationale WO 9745018 concerne un agent pour induire une résistance contre les micro-organismes phytopathogènes chez les végétaux. Cet agent est un extrait de biomasse provenant de micro-organismes non pathogènes pour les plantes. Dans une réalisation décrite, l'agent est un constituant de biomasse fongique, dérivé de déchets biotechnologiques issus d'un processus de fermentation ; cet agent peut être un champignon. Mais le déposant considère que ce document n'est pas pertinent pour l'état de la technique de l'invention visée par la présente demande, étant donné que la composition mise en oeuvre provient d'une biomasse microbienne.

La demande internationale WO 99-033346, qui a donné naissance au brevet européen 1001678, décrit un procédé propre à conférer à une plante agronomiquement utile une résistance systémique acquise, c'est-à-dire une immunité à l'égard d'un agent pathogène, immunité qui se traduit au moment où la plante se trouve être au contact dudit agent pathogène, par une potentialisation des défenses naturelles ; dans ce procédé, on traite ladite plante avant un contact avec ledit agent pathogène, par application notamment foliaire, d'une composition liquide comportant un oligo-β-1,3-glucane composé de 3 à 250 unités sacchariniques. La concentration de la composition liquide en oligo-β-1,3-glucanes est inférieure à la concentration à laquelle ledit oligo-β-1,3-glucane agit en tant qu'éliciteur, c'est-à-dire à laquelle il induit directement les réactions de défense. Il est indiqué que les oligo-β-1,3-glucanes peuvent être extraits à partir de divers champignons, dont une liste est fournie dans le brevet européen 1001678 précité (voir le passage page 4, ligne 54 jusqu'à page 5, ligne 4). L'exemple 1 indique que les β-1,3-glucanes mis en oeuvre sont extraits d'une bactérie ; l'exemple 2 indique que la matière première est une algue marine ; l'exemple 3 indique que la matière première est le zymosan ; l'exemple 4 indique que le β-1,3-glucane est constitué par le lichenan, qui est un hydrolysat extrait du champignon *Cetraria islandica.* Cependant, le déposant de la présente demande propose d'utiliser préférentiellement des extraits non phytotoxiques de champignons macroscopiques plutôt que des extraits d'algues ou de micro-organismes. Par ailleurs, l'homme de métier sait que l'organisation moléculaire de la paroi cellulaire des champignons macroscopiques comporte un grand nombre de couches formant une structure squelettique où l'on trouve des mannoprotéines liées par l'intermédiaire de β-1,6-glucanes aux β-1,3-glucanes ; cette structure squelettique complexe est renforcée par une faible quantité de chitine liée par covalence aux β-1,3-glucanes les plus profonds de ladite structure (voir notamment la publication G.J. Smits, H. Van den Ende, F.M. Klis ; Microbiology Vol. 147, 781-794, 2001). De ce fait, le déposant de la présente demande propose, de manière innovante et à travers l'utilisation de champignons comme sources, l'utilisation de complexes d'oligoglucanes et d'oligo-chitine/oligo-chitosans (publication Y. Desaki, I.Otomo, N. Shibuya ; Bioscience, Biotechnology and Biochemistry, Vol. 75, Iss. 2, 362-363, 2011) et/ou de mannoprotéines (publication C.W. Basse, K. Bock, T. Boller ; The Journal of Biological Chemistry, Vol. 267, I35. 15, 10258-10265. 1992) afin de profiter de la synergie d'effets éliciteurs entre ces différentes familles de molécules.

L'état de la technique comprend aussi le brevet WO 02/26037, qui propose l'utilisation de polymères et d'oligomères de xyloglucane en tant que produits phytosanitaires et biofertilisants ; le brevet WO 2007/042557, qui propose des compositions pour application phytopharmaceutique destinées à stimuler les défenses naturelles des plantes, notamment de la vigne, la tomate et la pomme de terre, permettant de lutter contre les maladies des plantes ; la publication de revue O.L. Ozeretskovskaya et L.G. Romenskaya ayant pour titre « Oligosaccharins as regulatory molécules of plants », Russian Journal of Plant Physiology, Moscow, RU, vol. 43, no. 5 ; la publication WPI/Derwent (semaine 90-338512) (Thompson Scientific, London), qui traite de l'hydrolyse partielle de polysaccharides contenant des structures de 1-3-β-glucanes ; et enfin, la publication « International Journal of Médicinal Mushrooms », vol. 7, no. 1-2, 2005, pages 221-236, ayant pour titre « Mushroom proteins related to hostdefense ».

Le but poursuivi par le déposant est, par conséquent, de proposer un nouveau procédé de stimulation des défenses naturelles de plantes et notamment un procédé actif pour la tomate, la pomme de terre, la vigne, le blé et le pommier. Le procédé selon l'invention permet une amélioration des défenses par rapport à un témoin non traité avec une réduction du nombre de traitements successifs à effectuer ; la composition à mettre en oeuvre est obtenue par un procédé qui aboutit à un produit non phytotoxique et l'usage de cette composition entraîne une réduction, ou même une suppression, des besoins de traitements complémentaires par des fongicides de synthèse.

Cette composition est obtenue à partir de la coulemelle, du pleurote ou du champignon de Paris ; elle comporte donc toute une série de produits extraits des champignons servant de matière première et notamment, comme on pouvait s'y attendre par l'étude de l'état de la technique, des β-1,3-glucanes. La composition obtenue selon l'invention correspond à une formulation particulière des différents produits en présence, ce qui permet d'obtenir, lors de l'application sur la plante à traiter, des résultats supérieurs à ceux que l'on obtient dans l'état de la technique mettant en oeuvre uniquement des β-1,3-glucanes. Les tests effectués sur la tomate montrent une augmentation de 35 % des activités de défense, suite à un traitement avec la composition obtenue par le procédé selon l'invention ; les tests sur la pomme de terre montrent une diminution de l'ordre de 40 % des taches dues au mildiou sur le feuillage par rapport à un témoin non traité. Les tests effectués sur la vigne montrent une augmentation de 100 % de l'activité de défense suite au traitement selon l'invention, lorsque l'on compare par rapport à un témoin non traité. Ceci démontre l'intérêt et la brevetabilité du procédé, qui propose la mise en oeuvre de la nouvelle composition selon l'invention.

A titre purement indicatif et sans que cela constitue aucunement une limitation quant à la composition et le procédé selon l'invention, il est possible d'indiquer, de façon préliminaire, que la composition selon l'invention comporte généralement un taux de protéines d'environ 10 % par rapport à la matière sèche, un taux de sucres totaux d'environ 75 % par rapport à la matière sèche, et une composition monosaccharidique d'environ 70 à 76 % molaire de glucose, d'environ 13 % molaire de galactose et d'environ 11 % molaire de mannose ; son taux de β-glucanes est généralement d'environ 54 % par rapport à la matière sèche et sa fraction polysaccharidique est d'environ 40 à 75 % de l'extrait sec, cette fraction ayant une masse moléculaire supérieure à 10 kDa. C'est l'ensemble de ces caractéristiques qui permet, lorsque l'on applique sur les plantes la composition mise en oeuvre par le procédé selon l'invention, d'obtenir des résultats de traitement nouveaux et particulièrement intéressants.

L'invention a pour objet une composition aqueuse renfermant des agents actifs obtenus par:
extraction alcaline d'une poudre de champignons macroscopiques comestibles choisis dans le groupe formé par les pleurotes, les coulemelles et les champignons de Paris, puis neutralisation de l'extrait obtenu avant de procéder à sa filtration ;
dilution de l'extrait filtré, puis hydrolyse enzymatique par une glycosidase entre 10 et 65°C de l'extrait filtré dilué, l'hydrolyse ainsi pratiquée étant arrêtée en inactivant l'enzyme à une température supérieure à 65°C ;
filtration de l'hydrolysat obtenu pour en isoler une fraction active de poids moléculaire inférieur à 100 kDa.

Dans un mode préféré de réalisation, la composition selon l'invention est caractérisée en ce que l'étape d'extraction alcaline est effectuée à une température comprise entre 20 et 100°C, en maintenant sous agitation une suspension de 5 à 15 parties en poids de poudre de champignons dans une solution aqueuse alcaline ayant un pH supérieur à 10 ; et la neutralisation de la solution obtenue par l'étape d'extraction alcaline s'effectue avec un acide organique ou minéral et l'on évacue le précipité obtenu ;.et le produit obtenu après neutralisation de l'extrait alcalin, est soumis à plusieurs filtrations, pour séparer de la phase liquide le(s) sel(s) d'acide et les sucres simples.

Dans un mode de réalisation, la composition selon l'invention est obtenue en effectuant l'hydrolyse enzymatique avec la glycosidase pendant 24 heures sous agitation.

Dans un mode de réalisation de la composition selon l'invention, la concentration de ladite composition en agents actifs est de 150 à 400 mg/L.

Dans un mode de réalisation, la composition selon l'invention comporte un taux de protéines de 5 à 15 % en poids par rapport à sa matière sèche ; comporte un taux de sucres totaux de 60 à 80 % en poids par rapport à sa matière sèche ; a une formulation monosaccharidique correspondant à une proportion pondérale de 38 à 50 % de glucose, de 18 à 28 % de galactose, de 20 à 30 % de mannose et de 0,5 à4 % de glucosamine et/ou de glucosamine acétylée ; contient de 35 à 45 % en poids de glucanes par rapport à sa matière sèche ; et contient de 30 à 50 % en poids d'une matière sèche, dont la masse moléculaire est supérieure à 10 kDa.

Dans un mode de réalisation, la composition selon l'invention contient au moins un agent de formulation compatible.

Dans un mode de réalisation, la composition selon l'invention comprend au moins un agent anti-phytopathogène choisi dans le groupe formé par un agent fongicide, un agent antibactérien, un agent antiviral, un agent pesticide et un agent de biocontrôle.

Dans un mode de réalisation, la composition selon l'invention contient au moins un élément nutritif pour les plantes en vue de son application simultanée.

La présente invention porte également sur un procédé propre à conférer par élicitation à une plante agronomiquement utile ou ornementale une protection à l'encontre d'un agent pathogène, ledit procédé consistant à traiter au moins certaines des parties aériennes de ladite plante par une composition aqueuse telle que définie ci-dessus.

Dans un mode de mise en oeuvre du procédé selon l'invention, on traite par pulvérisation les parties aériennes des plantes à traiter avec une composition ayant un pH compris entre 4 et 8, dont la concentration en agents actifs est de 1,5 à 4 % en poids.

Dans un mode de mise en oeuvre du procédé selon l'invention, ledit procédé est associé à un traitement des parties aériennes de la plante traitée avec un agent phytosanitaire conventionnel appliqué simultanément ou séquentiellement ou en alternance.

Dans un mode de mise en oeuvre du procédé selon l'invention, ledit procédé constitue un traitement préventif contre les maladies cryptogamiques, notamment celles choisies dans le groupe formé par les maladies de la vigne, des arbres fruitiers, des cultures légumières et des céréales, et notamment contre le mildiou (Plasmopara viticola), l'oïdium (Erysiphe necator), la pourriture grise (Botrytis cinerea) de la vigne, le mildiou (Phytophthora infestans) de la pomme de terre, la rouille jaune (Puccinia striiformis), la septoriose (Septoria sp.), la fusariose des épis (Fusarium graminearum) du blé et la tavelure du pommier (Venturia inaequalis).

Dans un mode de mise en oeuvre du procédé selon l'invention, ladite mise en oeuvre est effectuée au stade végétatif précoce et/ou aux stades végétatifs adulte et reproducteur.

Dans un mode de mise en oeuvre du procédé selon l'invention, ladite mise en oeuvre est effectuée à des intervalles de temps répétés, aussi souvent que nécessaire, et préférentiellement tous les huit à quinze jours.

On va donner ci-après, pour illustrer la réalisation et la mise en oeuvre de l'invention, trois exemples de fabrication d'extraits secs de trois compositions selon l'invention et sept exemples de mises en oeuvre du procédé de traitement selon l'invention. Ces exemples sont, bien entendu, fournis à titre purement illustratif et non limitatif.

### EXEMPLES

### Exemple 1 :

100 g de coulemelles séchées et broyées finement (<1mm) sont incorporées dans 1 litre de soude à 8 % additionnée de borohydrure de sodium à 0,1 %. On maintient la suspension sous agitation à température ambiante pendant 24 heures. Par ajout d'une solution d'acide acétique glacial, le milieu est amené jusqu'à pH 6,5. On ajoute une glucanase, à raison de 0,1 % m/V et l'ensemble est maintenu sous agitation à température ambiante pendant 20 heures. L'hydrolysat est centrifugé puis filtré. On ultrafiltre ensuite la solution dans un système d'ultrafiltration tangentielle de type Pellicon mini commercialisé par la société MILLIPORE équipé d'une membrane de porosité 100 kDa. Puis le perméat obtenu est soumis à une ultrafiltration sur membrane de 1 kDa pour dessaler la solution. La solution est concentrée puis lyophilisée. On obtient ainsi 7 g d'une poudre beige qui constitue l'hydrolysat EX1.

### Exemple 2 :

La matière première est constituée de pieds de champignons *Pleurotus Ostreatus.* 200 g de pieds de Pleurotes séchés et broyés finement (<1mm) sont dispersés dans 2L de soude à 8 %, en présence de borohydrure de sodium à 0,1 %. L'extraction est réalisée à température ambiante, pendant 24 heures, sous agitation mécanique. Par centrifugation, on élimine la fraction insoluble dans NaOH/NaBH₄. Le surnageant obtenu est ensuite neutralisé à l'acide acétique glacial. Le système enzymatique choisi est une β-glucanase d'*Aspergillus niger,* et ajouté à l'extrait à raison de 0,1 % m/V. On maintient l'ensemble à température ambiante pendant 3 heures. Après dénaturation à 100°C pendant 10 min, le milieu est centrifugé. L'extrait obtenu est clarifié par filtration. Le filtrat résultant est soumis à une microfiltration sur une membrane de porosité 0,1 µm puis sur une membrane de 100 kDa à une pression de 1 Bar. Le système utilisé est un système d'ultrafiltration tangentielle de type Pellicon mini commercialisé par la société MILLIPORE. Ce perméat est soumis à une ultrafiltration sur une membrane de 1 kDa à une pression de 2 Bars pour dessaler la solution. On obtient ainsi un rétentat, qui est ensuite lyophilisé. 15 g d'une poudre couleur beige constituant l'extrait EX2 sont obtenus.

### Exemple 3 :

La matière première est constituée de champignons de Paris. 100 g de champignons séchés et broyés finement (<1mm) sont dispersés dans 1,5L de soude à 8 %, en présence de borohydrure de sodium à 0,1 %. L'extraction est réalisée à température ambiante, pendant 24 heures, sous agitation magnétique. Le milieu est ensuite neutralisé à l'aide d'acide acétique. Après centrifugation, le surnageant est ultrafiltré à 1 kDa. Une β-glucanase est ajoutée à l'extrait à raison de 0,1 m/V. On maintient l'ensemble sous agitation à température ambiante pendant 24 heures. Après dénaturation à 100°C pendant 10 min, le milieu est centrifugé. Ce perméat est soumis à une ultrafiltration sur une membrane de 1 kDa. On obtient ainsi un rétentat, qui est ensuite lyophilisé. 1 g d'une poudre couleur beige constituant l'extrait EX3 sont obtenus.

### Exemple 4 :

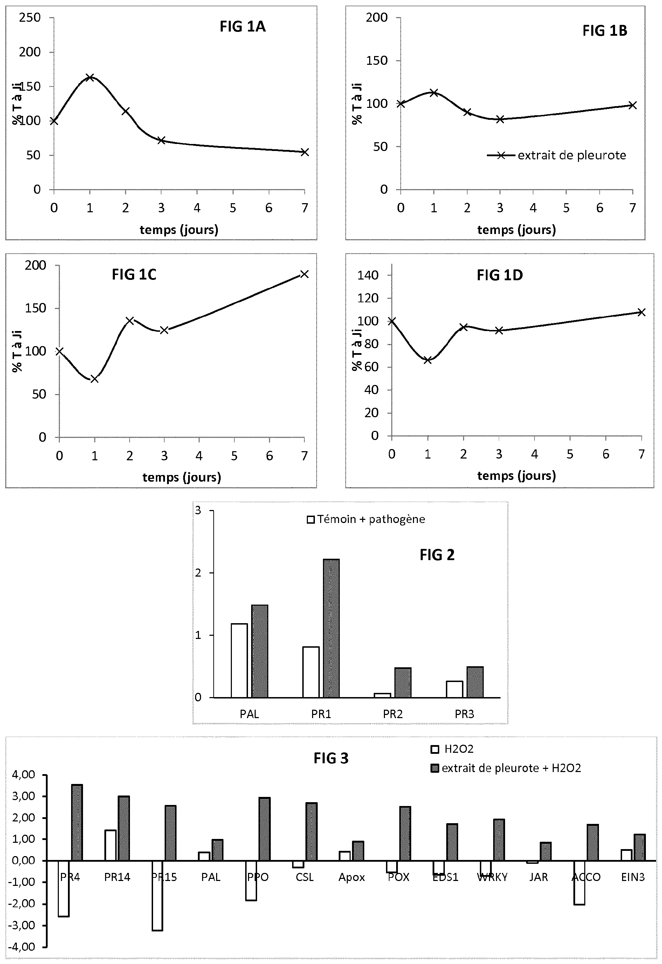

Etude montrant la stimulation des défenses chez la tomate par l'extrait de pleurote EX2 (voir figures 1A à 1D)
- Des plants de tomate de variété Marmande cultivés sous serre sont utilisés au stade 2 feuilles (BBCH 12 102). Le lot témoin est constitué de 24 plantes réparties dans 12 pots ; de même pour le lot traité.
   - A t=0, chaque plant est traité avec de l'extrait de pleurote EX2 préparé à une concentration de 0,4 g/L, par pulvérisation foliaire jusqu'à ruissellement.
   - chaque jour et pendant 7 jours, des plants sont récoltés, puis séparés en racines et parties aériennes. Les protéines sont extraites dans un tampon adapté et les activités enzymatiques phénylalanine ammonia lyase (PAL) et peroxydase sont mesurées dans les extraits correspondant. Ces activités constituent des marqueurs de défense des plantes : la PAL est impliquée dans la biosynthèse des phytoalexines, la peroxydase intervient dans la formation des lignines constituant de la paroi des cellules végétales.
   - Les activités enzymatiques spécifiques sont exprimées sous forme de pourcentage de la valeur obtenue pour les plantes traitées ramenées à celles des plantes témoins non traitées.

La figure 1 montre l'évolution des activités phénylalanine ammonia lyase et peroxydase au niveau des racines et des parties aériennes de plants de tomate ayant subi une pulvérisation par de l'extrait de pleurote. Les données sont exprimées en % du témoin non traité. Les représentations fournies aux figures 1A-1D sont les suivantes :
- Fig. 1A :: activité PAL racines
- Fig. 1B :: activité PAL parties aériennes
- Fig. 1C :: activité Peroxydase racine
- Fig. 1D :: activité Peroxydase parties aériennes

Les figures 1A-1D montrent qu'entre un et deux jours après application de l'extrait, une augmentation de l'activité PAL est observée aussi bien au niveau des racines que des parties aériennes, ce qui suggère une action élicitrice systémique de l'extrait de pleurote. Concernant l'activité peroxydase, elle apparaît plus intense entre 3 et 7 jours suggérant une réponse systémique plus tardive dans ce cas.

### Exemple 5 :

Etude montrant la stimulation des défenses chez la tomate par l'extrait de coulemelle en présence de *Botrytis cinerea* (voir figure 2)
- Des plants de tomate de variété Marmande cultivés sous serre sont utilisés au stade 2 feuilles (BBCH 12 102). Chaque lot de plantes est constitué de 6 plantes réparties dans 3 pots.
- A t=0, chaque plant est traité avec de l'extrait de coulemelle EX1 sous forme de solution à 0,4 g/L par pulvérisation foliaire jusqu'à ruissellement. L'opération est renouvelée à t=2 jours et t=5 jours. Des plants témoins sont traités selon la même périodicité mais avec une solution aqueuse de tensio-actif vendu sous la marque « Tween » à 0.5 % en poids.
- A t=7 jours, les plantes sont inoculées par le champignon pathogène (*Botrytis cinerea,* souche UBOCC-A-
   101100 de l'Université de Bretagne Occidentale). Une suspension de conidies (environ 10⁵ conidies/mL) dans solution aqueuse de tensio-actif vendu sous la marque « Tween » à 0.5 % en poids est déposée sur plusieurs feuilles sous forme de gouttelettes régulièrement réparties (100 µL/plante).
- A t=14 jours, les plantes sont récoltées en prélevant des disques foliaires sur chaque plante, qui sont congelés à -80°C. Les ARN sont extraits des échantillons de feuilles.
- Les niveaux d'expression de gènes de défense sont quantifiés par des techniques d'amplification par RT-PCR (Reverse Transcription Polymerase Chain Reaction) utilisant des sondes moléculaires spécifiques de gènes connus et choisis.
- Ces gènes correspondent à celui codant pour la PAL et à plusieurs protéines de pathogenèse (PR proteins) : PR1 (protéine marqueur de la réponse systémique des plantes), PR2 (protéine de type glucanase), et PR3 (protéine de type chitinase).
- Les niveaux d'expression des gènes sont quantifiés par référence à un gène constitutif, celui de la tubuline. Les résultats sont exprimés sous forme de ratio entre le niveau d'expression du gène lié aux processus de défense et le niveau d'expression de la tubuline.

La figure 2 montre l'expression des gènes associés aux réactions de défense (PAL : phénylalanine ammoni lyase, PR1, PR2 et PR3 : Pathogenesis Related) au niveau des feuilles de plants de tomate ayant subi un traitement soit par une solution aqueuse à 0,5 % en poids du tensio-actif vendu sous la marque « Tween » (témoin), soit par l'extrait de coulemelle, puis inoculés par *Botrytis cinerea.* Les données sont exprimées sous forme de ratio par rapport à l'expression du gène de la tubuline.

Le témoin présente une activation des gènes de défense particulièrement PAL et PR1 (PR3 et PR2 étant moins fortement activés) du fait de la présence du pathogène (figure 2). Cependant, le pré-traitement avec l'extrait de coulemelle provoque une plus forte expression des quatre gènes de défense étudiés notamment le PR1, décrit comme associé à la réponse systémique des plantes. Ainsi, l'activité stimulatrice des défenses naturelles est bien avérée pour cet extrait.

### Exemple 6 :

Etude montrant la stimulation des défenses chez le pommier par l'extrait de pleurote (voir figure 3)
- Des plants de pommier (*Malus domestica,* var. *Golden delicious*) ont été obtenus sous serre (20-25°C, photopériode naturelle) à partir de germination. Ils sont utilisés au stade 4-6 feuilles et disposés en blocs de 30 plantes par modalité à tester.
- Chaque bloc reçoit le traitement par pulvérisation foliaire jusqu'à ruissellement. L'extrait de pleurote est appliqué à une concentration de 0,7 g/L de matière sèche.
- Les blocs désignés par « +H₂O₂blocs » sont traités à J=1 par une pulvérisation de peroxyde d'hydrogène pour simuler une attaque par un pathogène (brevet WO 2011/161388).-A J3, des disques foliaires sont prélevés sur les plantes (10 disques par modalité). Après congélation dans l'azote liquide, les ARN sont extraits, et l'expression des gènes de défense (dont la liste est présentée dans le tableau 1) est mesurée par PCR quantitative à l'aide de l'outil qPFD^{®} (brevet susmentionné).
- Les niveaux d'expression relative ont été calculés avec la méthode dite 2 ^{ΔΔCt} : il s'agit d'expressions relatives par rapport au témoin EAU, normalisées par la moyenne géométrique des expressions relatives de 3 gènes de référence (TuA, Actin, GAPDH). Ces expressions relatives sont transformées en log2 pour donner le même poids aux inductions et aux répressions des gènes.

**Tableau 1 : Noms des gènes de défense et voies de défense auxquelles ils sont associés**

| **Types de défense** | **Noms des gènes** | |
|---|---|---|
| Protéines PR | PR4 | Pathogenesis-related protein 4 (hevein-like) |
| | PR14 | Pathogenesis-related protein 14 (lipid transfer protein) |
| | PR15 | Pathogenesis-related protein 15 (oxalate oxidase) |
| Voie des phénylpropanoïdes | PAL | Phénylalanine ammonia-lyase |
| | PPO | Polyphenol oxidase |
| Voie des cystéines | CSL | alliinase |
| Stress oxydant | Apox | Ascorbate peroxidase |
| | POX | Peroxidase |
| Voie de l'acide salicylique | EDS1 | Disease résistant protein 1 |
| | WRKY | WRKY transcription factor 30 |
| Voie de l'acide jasmonique | JAR | Jasmonate résistant 1 |
| Voie de l'éthylène | ACCO | 1-aminocyclopropene-1-carboxylate oxidase |
| | EIN3 | EIN3-binding F box protein 1 |

La figure 3 montre l'expression des gènes associés aux réactions de défense au niveau des feuilles de pommiers ayant subi un pré-traitement par l'extrait de pleurote (J0) puis traité par H₂O₂ (J1). Les données sont exprimées sous forme de ratio par rapport à l'expression de gènes de référence (tubuline, Actine,...).

Le prétraitement par extrait de pleurote provoque une stimulation de l'expression de nombreux gènes associés à différentes voies de défense (voie de phénylpropanoïdes, stress oxydant, voie de signalisation hormonale...), ce qui confirme l'effet éliciteur de l'extrait permettant d'augmenter les réponses de défense en présence de pathogènes.

### Exemple 7 :

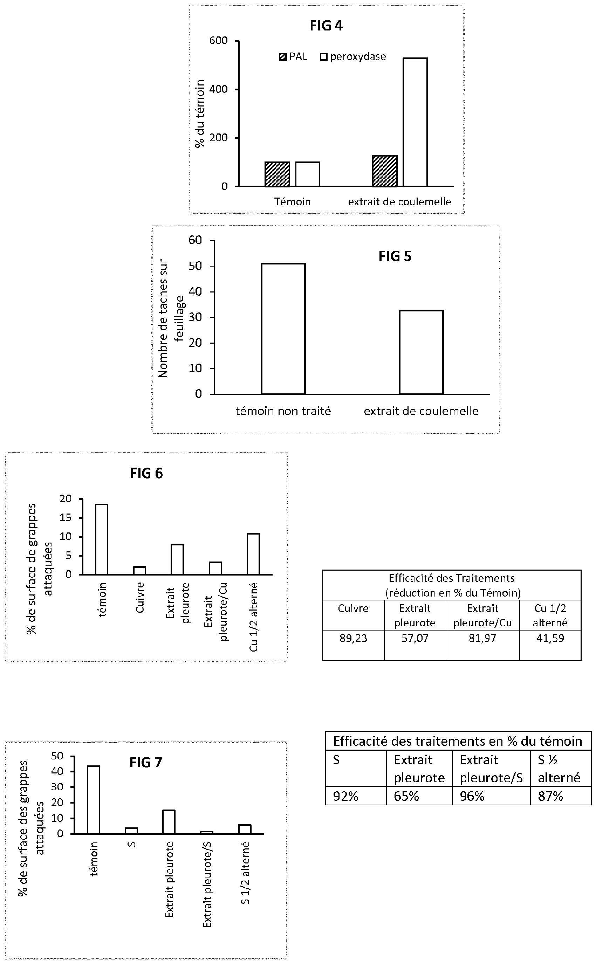

Etude montrant la stimulation des défenses chez la vigne par l'extrait de coulemelle an présence de *Botrytis cinerea* (voir figure 4)
- Des jeunes plants de vigne (cépage Cabernet Sauvignon) issus de pépinières sont cultivés sous serre (20-25°C, photopériode naturelle). Ils sont utilisés quand ils ont formé au moins un rameau portant 6 feuilles bien développées (stade BBCH 16).

A t=0, les pousses aériennes subissent un traitement par pulvérisation foliaire de l'extrait de coulemelle (1 pulvérisation de 200 µL d'une solution aqueuse à 0,4 g/L (matière sèche) par feuille étalée). L'opération est renouvelée à t=2 jours et t=5 jours. Les témoins ne sont pas traités.

A t=7 jours, toutes les plantes sont inoculées par le champignon pathogène (*Botrytis cinerea,* souche UBOCC-A-101100 de l'Université de Bretagne Occidentale). Une suspension de conidies (environ 10⁵ conidies/mL) dans une solution aqueuse à 0,5 % en poids du tensio-actif vendu sous la marque « Tween » est déposée sur plusieurs feuilles sous forme de gouttelettes régulièrement réparties (100pL7plante).

A t=14 jours, les feuilles traitées et inoculées sont récoltées et subissent une extraction de protéines dans un tampon adapté afin de mesurer les activités enzymatiques phénylalanine ammonia lyase (PAL) et peroxydase dans les extraits correspondants.
- Les activités enzymatiques spécifiques sont exprimées sous forme de pourcentage de la valeur obtenue pour les plantes traitées ramenées à celles des plantes témoins non traitées.

La figure 4 montre les activités phénylalanine ammonia lyase et peroxydase au niveau des feuilles de vigne traitées par pulvérisation avec l'extrait de coulemelle ou non (témoin) puis inoculées par *Botrytis cinerea.* Les données sont exprimées en % du témoin non traité.

De fortes stimulations des activités enzymatiques PAL et peroxydase sont observées suite au pré-traitement des plants de vigne par l'extrait de coulemelle ; ces activités sont augmentées de 25 % pour la PAL et multipliées par 5 pour la peroxydase.

### Exemple 8 :

Efficacité de l'extrait de coulemelle sur la réduction des symptômes liés au mildiou sur pomme de terre au cours d'essais plein champ :
- Un essai plein champ a été conduit sur la pomme de terre (*Solanum tuberosum,* var. Ditta) au cours de l'année 2014 à Auchy-les-Mines (62, France) en vue de déterminer l'efficacité de l'extrait de coulemelle en protection vis-à-vis du mildiou (*Phytophthora infestans*). La plantation a été réalisée le 18/04/14.

Sur la parcelle expérimentale, 4 micro-parcelles par condition de traitement ont été réparties statisti-quement ;
- Cinq traitements ont été effectués avec l'extrait de coulemelle : 11 juin (stade 40 cm), le 18/06/14 (stade BBCH 60), le 25/06/14 (stade BBCH 70) et le 09/07/14 (stade BBCH 74).
- En début de campagne, la pression du mildiou était importante ce qui a nécessité l'application d'un fongicide de synthèse, le dithane (entre le 1^{er} juin stade 5 cm, et le 7 juin 2014, stade 20 cm).
- Puis, étant donné les conditions météorologiques moins favorables au développement de la maladie par la suite, deux contaminations artificielles de la parcelle ont été réalisées : la première par une suspension de spores issues de feuilles contaminées provenant d'un tas de déchets (30/05/14), la seconde le 02/06/14 par un inoculum provenant d'un laboratoire (Eurofins, Loos en Gohelle). Ces deux contaminations ont permis d'obtenir une pression homogène du mildiou sur la parcelle.

Les notations présentées sur la figure 5 ont été réalisées le 4 juillet au stade BBCH 70 correspondant au nombre de taches moyen par plante sur les rangs centraux. La figure 5 montre le dénombrement des taches apparaissant sur le feuillage des plants de pomme de terre ayant subi ou non un pré-traitement par l'extrait de coulemelle (comptage du 04/07/14). L'essai était mené en plein champ après contamination par du mildiou (*Phytophthora infestans*). Le pré-traitement par l'extrait de coulemelle (application de l'équivalent de 35 g d'extrait sec par hectare) réduit les symptômes associés au mildiou. Le nombre de taches sur le feuillage est réduit en moyenne de 39 %. L'extrait de coulemelle a donc montré son efficacité en plein champ en cas de pression moyenne en mildiou.

### Exemple 9 :

Efficacité de l'extrait de pleurote sur la réduction des symptômes liés au mildiou (*Plasmopara viticola*) sur la vigne au cours d'essais plein champ (voir figure 6)

Un essai plein champ a été conduit sur la vigne (*Vitis vinifera*), cépage Grenache noir) au cours de l'année 2015 à Villelongue del monts (66, France) en vue de déterminer l'efficacité de l'extrait de pleurote en protection vis-à-vis du mildiou (*Plasmopara viticola*), seul ou en alternance avec la bouillie bordelaise (BB) (750 g Cu/ha).
- Sur la parcelle expérimentale, 4 micro-parcelles par condition de traitement ont été réparties statistiquement ; l'essai a été conduit en conditions contrôlées avec une contamination artificielle le 17 mai limitée à la 1ère souche de chaque parcelle élémentaire et l'humidité générale a été entretenue par des aspersions régulières.
- Les traitements réalisés entre le 12/05/15 et le 06/07/15 à une dose de 200 Uha sont présentés dans le tableau 2. Le témoin ne reçoit aucun traitement ; le traitement « cuivre » consiste à appliquer entre le 12/05/15 et le 06/07/15 de la bouillie bordelaise à la dose équivalente à 750 g Cu/ha (sept applications au total). L'extrait de pleurote EX2 est appliqué sous forme de solution aqueuse à 35 g/ha, soit seul, soit en alternance avec de la bouillie bordelaise (extrait de pleurote/Cu). Une modalité destinée à évaluer l'efficacité de traitements à base de bouillie bordelaise à la même dose que le traitement cuivre mais appliqués 3 fois au lieu de 7, a aussi été évalué (Cu ½).

Le tableau 2 montre le calendrier de traitement pour les différentes modalités (essai plein champ vigne/mildiou).

BB : bouillie bordelaise ; Ple : extrait de pleurote ; - : pas de traitement.

**Tableau 2 :**

| Dates | | 12/05/1 5 | 18/05/1 5 | 28/05/1 5 | 05/06/1 5 | 16/06/1 5 | 26/06/1 5 | 06/07/1 5 |
|---|---|---|---|---|---|---|---|---|
| **Stades BBCH** | | **55** | **57** | **63** | **73** | **75** | **79** | **79** |
| Traitements | Témoin | - | - | - | - | - | - | - |
| | Cuivre | BB | BB | BB | BB | BB | BB | BB |
| | Extrait de pleurote | Ple | Ple | Ple | Ple | Ple | Ple | Ple |
| | Extrait de pleurote/ Cu | BB | Ple | BB | Ple | BB | Ple | BB |
| | Cu ½ | BB | - | BB | - | - | BB | - |

Les notations présentées sur la figure 6 ont été réalisées le 20 juillet au stade 81 (début de véraison). La fréquence des attaques est estimée par le pourcentage de grappes attaquées par la maladie.

La figure 6 montre la surface de grappe attaquée (%) sur des vignes après traitement (ou non) par l'extrait de pleurote, ainsi qu'en alternance avec de la bouillie bordelaise (extrait pleurote/Cu). L'essai avait été mené en plein champ après contamination par du mildiou (*Plasmopara viticola*). L'efficacité exprimée en % du témoin est indiquée dans le tableau joint à la figure.

L'extrait de pleurote permet donc une réduction des symptômes d'attaque par le mildiou. Le taux d'efficacité de 57 % n'est pas aussi élevé que celui du traitement par le cuivre (89%) utilisé ici comme fongicide. Cependant, le traitement alterné (extrait pleurote/Cuivre) présente un niveau d'efficacité supérieur (82%) : il permet donc de proposer une solution de protection des cultures efficace permettant une réduction de l'emploi du fongicide. L'extrait de pleurote appliqué en alternance avec le cuivre montre un niveau d'efficacité largement supérieur (82%) à celui de la ½ dose de cuivre, confirmant ainsi la stimulation des défenses de la plante par l'extrait de pleurote.

### Exemple 10 :

Efficacité de l'extrait de pleurote sur la réduction des symptômes liés à l'Oïdium (*Erysiphe necator*) sur vigne au cours d'essais plein champ (voir figure 7).

Un essai plein champ a été conduit sur la vigne (*Vitis vinifera*, cépage Chardonnay) au cours de l'année 2015 à Alénya (66, France) en vue de déterminer l'efficacité de l'extrait de pleurote EX2 en protection vis-à-vis de l'Oïdium (*Erysiphe necator*), seul ou en alternance avec du Thiovit (8 kg/ha).
- Sur la parcelle expérimentale, 4 micro-parcelles par condition de traitement ont été réparties statistiquement ;
- L'oïdium est apparu relativement tard sur grappes après une phase très discrète sur feuilles. Au premier comptage le 25 juin (stade végétatif BBCH 77), il a été relevé un niveau correct de maladie dans les parcelles témoin non traitées avec une attaque de 70.50 % en fréquence et 30.25 % en intensité. Au deuxième comptage le 23 juillet (stade végétatif BBCH 85), il a été observé une attaque de 77.50 % en fréquence et 40.60 % en intensité.

- Les traitements ont été réalisés entre le 17/04/15 et le 26/06/15 à une dose de 180 Uha et sont présentés dans le tableau 3. Le témoin ne reçoit aucun traitement. Le traitement « soufre » consiste à appliquer, entre le 14/04/15 et le 26/06/15, le produit vendu sous la dénomination commerciale « Thiovit » à la dose équivalente à 8 kg/ha (huit applications au total). L'extrait de pleurote EX2 est appliqué sous forme d'une solution à 35 g/ha, soit seul, soit en alternance avec le « Thiovit » précité (extrait de pleurote/soufre). Une modalité destinée à évaluer l'efficacité de traitement à base du produit précité « Thiovit » à la même dose que le traitement soufre, mais appliquée 4 fois au lieu de 7 a aussi été évaluée (S ½).

Les différentes modalités sont présentées dans le tableau 3 ci-dessous.

**Tableau 3 : Calendrier de traitement pour les différentes modalités (essai plein champ vigne/oïdium)**

| | | T1 | T2 | T3 | T4 | T5 | T6 | T7 | T8 |
|---|---|---|---|---|---|---|---|---|---|
| Dates | | 12/05/ 15 | 18/05/ 15 | 28/05/ 15 | 05/06/ 15 | 16/06/ 15 | 26/06/ 15 | 06/07/ 15 | 26/06/ 15 |
| **Stades BBCH** | | **15** | **53** | **55** | **61** | **73** | **75** | **77** | **77** |
| T r a i t e m e n t s | Témoin | - | - | - | - | - | - | - | - |
| | soufre | S | S | S | S | S | S | S | S |
| | Extrait de pleurote | Ple | Ple | Ple | Ple | Ple | Ple | Ple | Ple |
| | Extrait de pleurote/ S | S | Ple | S | Ple | S | Ple | S | Ple |
| | S ½ | S | - | S | - | S | - | S | - |

La figure 7 montre la surface de grappe attaquée (%) par l'Oïdium sur des vignes (cépage Chardonnay) traitées (ou non) par l'extrait de pleurote, ainsi qu'en alternance avec du produit « Thiovit » précité (extrait de pleurote/S). L'efficacité est exprimée en % du témoin et indiquée dans le tableau joint à la figure 7.

L'extrait de pleurote permet une réduction des symptômes d'attaque par l'oïdium. Le taux d'efficacité de 65 % n'est pas aussi élevé que celui du traitement par le soufre (92%) utilisé ici comme fongicide. Cependant, le traitement alterné (extrait de pleurote/soufre) présente un niveau d'efficacité supérieur (96%) : il permet donc de proposer une solution de protection des cultures efficace, qui permet une réduction de l'emploi du fongicide. L'extrait de pleurote appliqué en alternance avec le soufre montre un niveau d'efficacité largement supérieur (96%) à celui de la ½ dose de soufre (87%), confirmant ainsi la stimulation des défenses de la plante par l'extrait de pleurote.

On constate donc que, pour lutter contre le mildiou ou l'oïdium, le programme alterné fongicide/extrait de pleurote a montré un niveau de protection suffisant pour une conduite sécurisée de la culture de la vigne en plein champ.

### Exemple 11 :

Etude montrant la stimulation des défenses par l'extrait de pleurote et l'extrait de champignon de Paris chez *Brachypodium distachyon* en présence de *Fusarium graminearum.*

Une plante modèle de céréale tempérée, *Brachypodium distachyon,* a été cultivée sous serre et utilisée pour cet essai 4 semaines après semis. Un lot de 10 plantes par répétition a été constitué et deux répétitions biologiques ont été réalisées.

Les prétraitements ont consisté à appliquer par pulvérisation l'extrait de pleurote et l'extrait de champignon de Paris des exemples 2 et 3 à une concentration de 0,35g/L, sur l'ensemble des épis aux jours 0, 2 et 5, ceci jusqu'à ruissellement. L'inoculation de *Fusarium graminearum* a été réalisée au jour 7 (= stade mi-anthèse, BBCH65), par pulvérisation sur tous les épis d'une suspension de spores à 10⁵ spores/mL.

Des récoltes des plantes ont lieu à t=0, t= 24h ou t=48h. Plusieurs analyses sont mises en oeuvre :
Les symptômes de fusariose ont été observés à 10 jours de post-inoculation ;

La biomasse fongique a été quantifiée et exprimée en ng d'ADN génomique de *F. graminearum* pour 10 ng d'ADN génomique total (plante + champignon) déterminée par PCR quantitative. Des amorces spécifiques du gène *TUB2* de *F. graminearum* ont été utilisées pour déterminer la quantité d'ADN génomique fongique par référence à une gamme étalon.

L'expression de deux gènes de défense de *B. distachyon* a été suivie : le gène *PAL* codant la phénylalanine-ammonialyase (1er enzyme de la voie de biosynthèse des phénylpropanoïdes) et le gène *PR9* codant une protéine « pathogenesis-related » (PR de type peroxydase). Deux gènes de référence ont été utilisés, *ACT7* et *UBC18.* L'expression de ces deux gènes a été déterminée dans des épis traités au préalable par l'extrait de pleurote ou de champignon de Paris relativement à des épis témoins, inoculés avec la souche PH-1 de *F. graminearum.*

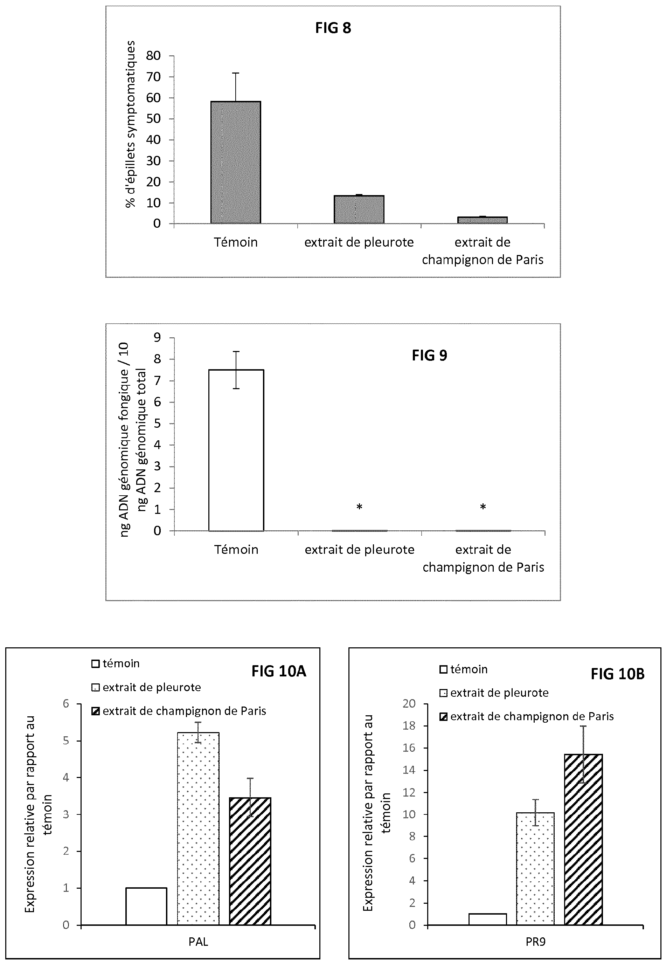

La figure 8 représente la notation des symptômes à 10 jours de post-inoculation en % d'épillets symptômatiques. Un épillet est considéré comme symptômatique si 50% ou plus des cavités florales présentent des symptômes de fusariose. Le témoin est un épi non traité au préalable ; les épis sont traités préalablement à l'inoculation de *F. graminearum* par les extraits de pleurote ou de champignon de Paris.

Les résultats montrent une réduction importante des symptômes de fusariose sur les plantes traitées avec les extraits de champignons. Ainsi, les extraits de pleurote et de champignon de Paris confèrent une protection contre l'infection de *B. distachyon* par *F. graminearum* de 77% et 94,7%, respectivement.

La figure 9 représente la quantification de la biomasse fongique exprimée en ng d'ADN génomique de *F. graminearum* pour 10 ng d'ADN génomique total (plante + champignon) déterminée par PCR quantitative. Des amorces spécifiques du gène *TUB2* de *F. graminearum* ont été utilisées pour déterminer la quantité d'ADN génomique fongique par référence à une gamme étalon. Les astérisques indiquent les valeurs significativement différentes du témoin (test tde Student, p-value<0,05).

La quantification de la biomasse de *F. graminearum* sur les différents épis indique une quantité négligeable d'ADN génomique fongique au sein d'une même quantité d'ADN génomique total (plante + champignon) sur les épis prétraités avec chacun des deux extraits par comparaison avec le témoin non traité (Figures 10A et 10B).

Les figures 10A et 10B représentent l'expression relative des gènes *PAL* (A) et *PR9* (B) dans des épis de *B. distachyon* prétraités avec les extraits de pleurote (barres motif à points), ou l'extrait de champignon de Paris (barres hachurées) et inoculés par *F. graminearum,* puis récoltés 48 heures après le post-inoculation. L'expression relative a été déterminée par rapport à des épis de *B. distachyon* non traités au préalable par les extraits, en utilisant la méthode des ΔΔCt. Deux gènes de référence de *B. distachyon,* constitutivement exprimés ont été utilisés : *ACT7* et *UBC18.*

Les résultats indiquent que l'expression relative des gènes *PAL* et *PR9* est plus induite 48 heures après inoculation par *F. graminearum* dans les épis traités avec les extraits de pleurote et de champignon de Paris que dans les épis non prétraités (Figures 10A et 10B). En effet, l'expression du gène *PAL* se trouve induite 5,2 fois plus suite à l'application de l'extrait de pleurote et près de 3,5 fois plus suite à l'application de l'extrait de champignon de Paris. Les résultats sont encore plus prononcés concernant le gène *PR9* qui présente une induction 10,2 et 15,4 fois plus importante suite à l'application des extraits de Pleurote et de champignon de Paris, respectivement, par rapport à des épis non prétraités.

## Revendications

1. - Composition aqueuse renfermant des agents actifs obtenus par :
- extraction alcaline d'une poudre de champignons macroscopiques comestibles choisis dans le groupe formé par les pleurotes, les coulemelles et les champignons de Paris, puis neutralisation de l'extrait obtenu avant de procéder à sa filtration ;
- dilution de l'extrait filtré, puis hydrolyse enzymatique par une glycosidase entre 10 et 65°C de l'extrait filtré dilué, l'hydrolyse ainsi pratiquée étant arrêtée en inactivant l'enzyme à une température supérieure à 65°C ;
- filtration de l'hydrolysat obtenu pour en isoler une fraction active de poids moléculaire inférieur à 100 kDa.

2. - Composition selon la revendication 1, **caractérisée en ce que** l'étape d'extraction alcaline est effectuée à une température comprise entre 20 et 100°C, en maintenant sous agitation une suspension de 5 à 15 parties en poids de poudre de champignons dans une solution aqueuse alcaline ayant un pH supérieur à 10 ; et la neutralisation de la solution obtenue par l'étape d'extraction alcaline s'effectue avec un acide organique ou minéral et l'on évacue le précipité obtenu ; et le produit obtenu après neutralisation de l'extrait alcalin est soumis à plusieurs filtrations, pour séparer de la phase liquide le (s) sel (s) d'acide et les sucres simples.

3. - Composition selon l'une des revendications 1 et 2, **caractérisée en ce que** l'hydrolyse enzymatique effectuée avec la glycosidase est maintenue jusqu'à 24h sous agitation.

4. - Composition selon l'une des revendications 1 à 3, **caractérisée en ce que** sa concentration en agents actifs est de 150 à 400 mg/L.

5. - Composition selon l'une des revendications 1 à 4, **caractérisée en ce que** :
- elle comporte un taux de protéines de 5 à 15% en poids par rapport à sa matière sèche ;
- elle comporte un taux de sucres totaux de 60 à 80% en poids par rapport à sa matière sèche ;
- elle a une formulation monosaccharidique correspondant à une proportion pondérale de 38 à 50% de glucose, de 18 à 28% de galactose, de 20 à 30% de mannose et de 0,5 à 4% de glucosamine et/ou de glucosamine acétylée ;
- elle contient de 35 à 45% en poids de glucanes par rapport à sa matière sèche ; et
- elle contient de 30 à 50% en poids d'une matière sèche, dont la masse moléculaire est supérieure à 10kDa.

6. - Composition selon l'une des revendications 1 à 5, **caractérisée en ce qu'**elle contient au moins un agent de formulation compatible.

7. - Composition selon la revendication 6, **caractérisée en ce qu'**elle comprend au moins un agent anti-phytopathogène choisi dans le groupe formé par un agent fongicide, un agent antibactérien, un agent antiviral, un agent pesticide et un agent de biocontrôle.

8. - Composition selon l'une des revendications 1 à 7, **caractérisée en ce qu'**elle contient au moins un élément nutritif pour les plantes en vue de son application simultanée.

9. - Procédé propre à conférer par élicitation à une plante agronomiquement utile ou ornementale une protection à l'encontre d'un agent pathogène, ledit procédé consistant à traiter au moins certaines des parties aériennes de ladite plante par une composition aqueuse telle que définie à l'une des revendications 1 à 8.

10. - Procédé selon la revendication 9, **caractérisé en ce qu'**il consiste à traiter par pulvérisation les parties aériennes des plantes à traiter avec une composition ayant un pH comprise entre 4 et 8, dont la concentration en agents actifs est de 1,5 à 4 % en poids.

11. - Procédé selon l'une des revendications 9 et 10, **caractérisé en ce qu'**il est associé à un traitement des parties aériennes de la plante traitée avec un agent phytosanitaire conventionnel appliqué simultanément ou séquentiellement ou en alternance.

12. - Procédé selon l'une des revendications 9 à 11, **caractérisé en ce qu'**il constitue un traitement préventif contre les maladies cryptogamiques notamment celles choisies dans le groupe formé par les maladies de la vigne, des arbres fruitiers, des cultures légumières et des céréales, et notamment contre le mildiou (Plasmopara viticola), l'oïdium (Erysiphe necator), la pourriture grise (Botrytis cinerea) de la vigne, le mildiou (Phytophthora infestants) de la pomme de terre, la rouille jaune (Puccinia striiformis), la septoriose (Septoria sp.), la fusariose des épis (Fusarium graminearum) du blé et la tavelure du pommier (Venturia inaequalis).

13. - Procédé selon l'une des revendications 9 à 12, **caractérisé en ce qu'**il est mis en œuvre aux stades végétatifs précoces et/ou aux stades végétatifs adultes et reproducteurs.

14. - Procédé selon l'une des revendications 9 à 13, **caractérisé en ce qu'**il est mis en œuvre à des intervalles de temps répétés, aussi souvent que nécessaire, préférentiellement tous les 8 à 15 jours.

## Patentansprüche

1. - Wässrige Zusammensetzung, die Wirkstoffe einschließt, erhalten durch:
- alkaline Extraktion eines Pulvers von essbaren makroskopischen Pilze, ausgewählt aus der Gruppe, gebildet aus Austernpilzen, Riesenschirmling und Champignons, dann Neutralisierung des erhaltenen Extrakts vor seiner Filterung;
- Versdünnung des gefilterten Extrakts, dann enzymatische Hydrolyse durch eine Glykosidase zwischen 10 und 65 °C des verdünnten gefilterten Extrakts, wobei die so durchgeführte Hydrolyse gestoppt wird, indem das Enzym bei einer Temperatur von 65 °C inaktiviert wird;
- Filtration des erhaltenen Hydrolysats, um davon eine aktive Fraktion mit einem Molekulargewicht von weniger als 100 kDa zu isolieren.

2. - Zusammensetzung nach Anspruch 1, **dadurch gekennzeichnet, dass** der Schritt des alkalinen Extrahierens bei einer Temperatur im Bereich zwischen 20 und 100 °C durchgeführt wird, indem eine Suspension von 5 bis 15 Gewichtsteilen Pulver aus Pilze in einer alkalinen wässrigen Lösung mit einem pH-Wert von mehr als 10 gerührt wird; und die Neutralisation der Lösung, erhalten durch den Schritt des alkalinen Extrahierens, mit einer organischen oder mineralischen Säure erfolgt und die erhaltene Ausfällung entfernt wird; und das Produkt, erhalten nach der Neutralisierung des alkalinen Extrakts, mehreren Filtrationen unterzogen wird, um von der flüssigen Phase das/die Säuresalz(e) und die einfachen Zucker zu trennen.

3. - Zusammensetzung nach einem der Ansprüche 1 und 2, **dadurch gekennzeichnet, dass** die enzymatische Hydrolyse, durchgeführt mit der Glycosidase, bis zu 24 Stunden gerührt wird.

4. - Zusammensetzung nach einem der Ansprüche 1 bis 3, **dadurch gekennzeichnet, dass** ihre Konzentration an Wirkstoffen von 150 bis 400 mg/L reicht.

5. - Zusammensetzung nach einem der Ansprüche 1 bis 4, **dadurch gekennzeichnet, dass**
- sie einen Proteingehalt von 5 bis 15 Gew.% mit Bezug auf ihre Trockenmasse umfasst;
- sie einen Gesamtzuckergehalt von 60 bis 80 Gew.% mit Bezug auf ihre Trockenmasse umfasst;
- sie eine monosaccharide Formulierung aufweist, die einem Gewichtsverhältnis von 38 bis 50 % Glucose, von 18 bis 28 % Galactose, von 20 bis 30 % Mannose und von 0,5 bis 4 % Glucosamin und/oder acetyliertem Glucosamin entspricht;
- sie von 35 bis 45 % Glucane mit Bezug auf ihre Trockenmasse enthält; und
- sie von 30 bis 50 Gew% einer Trockenmasse enthält, deren Molekulargewicht grösser als 10kDa ist.

6. - Zusammensetzung nach einem der Ansprüche 1 bis 5, **dadurch gekennzeichnet, dass** sie mindestens ein kompatibles Formulierungsmittel umfasst.

7. - Zusammensetzung nach Anspruch 6, **dadurch gekennzeichnet, dass** sie mindestens ein antiphytopathogenes Mittel umfasst, ausgewählt aus der Gruppe, gebildet aus einem fungiziden Mittel, einem antibakteriellen Mittel, einem antiviralen Mittel, einem pestiziden Mittel und einem Biokontrollmittel.

8. - Zusammensetzung nach einem der Ansprüche 1 bis 7, **dadurch gekennzeichnet, dass** sie mindestens ein Nährelement für die Pflanzen angesichts ihrer gleichzeitigen Anwendung enthält.

9. - Verfahren, das geeignet ist, um durch Hervorheben einer agronomisch nützlichen oder Zierpflanze einen Schutz gegen einen Krankheitserreger zu verleihen, wobei das Verfahren darin besteht, mindestens bestimmte der oberirdischen Teile der Pflanze durch eine wässrige Zusammensetzung, wie in einem der Ansprüche 1 bis 8 definiert, zu behandeln.

10. - Verfahren nach Anspruch 9, **dadurch gekennzeichnet, dass** es darin besteht, durch Pulverisierung die oberirdischen Teile der zu behandelnden Pflanzen mit einer Zusammensetzung zu behandeln, die einen pH-Wert im Bereich zwischen 4 und 8 aufweist, deren Konzentration an Wirkstoffen von 1,5 bis 4 Gew% beträgt.

11. - Verfahren nach einem der Ansprüche 9 bis 10, **dadurch gekennzeichnet, dass** es mit einer Behandlung der oberirdischen Teile der Pflanze, behandelt mit einem herkömmlichen Pflanzenschutzmittel, das gleichzeitig oder sequenziell oder alternierend angewendet wird, assoziiert ist.

12. - Verfahren nach einem der Ansprüche 9 bis 11, **dadurch gekennzeichnet, dass** es ein präventives Verfahren gegen kryptogammische Krankheiten darstellt, insbesondere diejenigen, ausgewählt aus der Gruppe, gebildet aus den Krankheiten des Weinstocks, der Obstbäume, des Gemüse- und Getreideanbaus, und insbesondere gegen den Mehltau, (plasmopara viticola), das Oidium (erysiphe necator), die Graufäule (botrytis cinerea) des Weinstocks, den Mehltau (phytophthora infestants) der Kartoffel, den Gelbrost (puccinia striiformis), die Septoria (septoria sp.), die Fusariose der Ähren (Fusarium graminearum) des Weizens und den Schorf des Apfelbaums (venturia inaequalis).

13. - Verfahren nach einem der Ansprüche 9 bis 12, **dadurch gekennzeichnet, dass** es in den frühen Vegetationsstadien und/oder in den reifen und reproduktiven Vegetationsstadien durchgeführt wird.

14. - Verfahren nach einem der Ansprüche 9 bis 13, **dadurch gekennzeichnet, dass** es in wiederholten Zeitintervallen sooft wie erforderlich, vorzugsweise alle 8 bis 15 Tage, durchgeführt wird.

## Claims

1. - An aqueous composition comprising active agents obtained by:
- alkaline extraction of a powder of edible macroscopic fungi selected from the group formed by oyster mushrooms, parasol mushrooms and button mushrooms, then neutralization of the obtained extract before proceeding to its filtration;
- dilution of the filtered extract, then enzymatic hydrolysis with a glycosidase at between 10 to 65°C of the diluted filtered extract, wherein the hydrolysis thus performed is stopped by inactivating the enzyme at a temperature above 65°C;
- filtration of the obtained hydrolyzate to isolate an active fraction of molecular weight less than 100 kDa.

2. - The composition according to claim 1, **characterized in that** the alkaline extraction step is carried out at a temperature between 20 and 100°C, while maintaining under stirring a suspension of 5 to 15 parts by weight of mushroom powder in an alkaline aqueous solution having a pH greater than 10 ; and the neutralization of the solution obtained by the alkaline extraction step is carried out with an organic or inorganic acid and the precipitate obtained is removed ; and the product obtained after neutralization of the alkaline extract is subjected to several filtrations, to separate the acid salt(s) and the simple sugars from the liquid phase.

3. - The composition according to claim 1 or 2, **characterized in that** the enzymatic hydrolysis performed with the glycosidase is maintained until to 24h with stirring.

4. - The composition according to one of claims 1 to 3, **characterized in that** its concentration of active agents is of 150 to 400 mg/L.

5. - The composition according to one of claims 1 to 4, **characterized in that**:
- it comprises a protein content of 5 to 15% by weight relative to its dry matter;
- it comprises a total sugar content of 60 to 80% by weight relative to its dry matter;
- it has a monosaccharide formulation corresponding to a weight proportion of 38 to 50% of glucose, 18 to 28% of galactose, 20 to 30% of mannose, and 0.5 to 4% of glucosamine and/or acetylated glucosamine;
- it comprises 35 to 45% by weight of glucans relative to its dry matter; and
- it comprises 30 to 50% by weight of a dry matter, whose molecular weight is greater than 10 kDa.

6. - The composition according to one of claims 1 to 5, **characterized in that** it contains at least one compatible formulation agent.

7. - The composition according to claim 6, **characterized in that** it comprises at least one anti-phytopathogenic agent chosen from the group consisting of a fungicidal agent, an antibacterial agent, an antiviral agent, a pesticidal agent, and a biocontrol agent.

8. - The composition according to one of claims 1 to 7, **characterized in that** it contains at least one nutrient for plants for simultaneous application.

9. - A method suitable for conferring protection against a pathogen agent by elicitation on an agronomically useful or ornamental plant, wherein the method consists in treating at least some of the aerial parts of the plant with an aqueous composition such as defined in one of claims 1 to 8.

10. - The method according to claim 9, **characterized in that** it consists in treating by spraying the aerial parts of the plants to be treated with a composition having a pH of between 4 and 8, wherein the concentration of active agents is 1,5 to 4% by weight.

11. - The method according to one of claims 9 and 10, **characterized in that** it is associated with a treatment of the aerial parts of the plant to be treated with a conventional phytosanitary agent applied simultaneously or sequentially or alternately.

12. - The method according to one of claims 9 to 11, **characterized in that** it is a preventive treatment against fungal diseases in particular those selected from the group formed by diseases of the vine, fruit trees, vegetable crops and cereals, and in particular against downy mildew (Plasmopara viticola), powdery mildew (Erysiphe necator), gray mold (Botrytis cinerea) of the vine, late blight (Phytophthora infestans) of the potato, yellow rust (Puccinia striiformis), Septoria leaf blotch (Septoria sp.), Fusarium head blight (Fusarium graminearum) of wheat, and apple scab (Venturia inaequalis).

13. - The method according to one of claims 9 to 12, **characterized in that** it is implemented in the early vegetative stages and/or in the adult and reproductive vegetative stages.

14. - The method according to one of claims 9 to 13, **characterized in that** it is implemented at repeated time intervals, as often as necessary, preferably every 8 to 15 days.
